# DEMANDE DE BREVET EUROPEEN

(11) **EP 0 842 691 A1**
(43) Date de publication de la demande: **20.05.1998**
(21) Numéro de dépôt: 97402677.5
(22) Date de dépôt: 07.11.1997
(51) Int. Cl.: B01D 53/053

(54) **Procédé et installation de séparation de mélanges gazeux par adsorption à variation de pression**

(30) Priorité: 15.11.1996 FR 9613968
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Monereau, Christian, 75011 Paris (FR); Andreani, Philippe, 94270 Le Kremlin Bicetre (FR); Petit, Pierre, 78530 Buc (FR)
(74) Mandataire: Mercey, Fiona Susan

(57) **Abrégé**

Le procédé de séparation, mettant en oeuvre un adsorbeur contenant au moins un adsorbant et ayant une entrée et une sortie, comporte les étapes de cycle suivantes : - une étape 1, de repressurisation à partir de la pression basse de cycle; - des étapes Il et III dans l'une desquelles la pression haute de cycle est atteinte; et une étape IV, de dépressurisation/purge, où la pression basse de cycle est atteinte, chaque étape (I-IV) comportant un flux gazeux fixé (F) à une extrémité de l'adsorbeur et un flux gazeux libre (ℓ) à l'autre extrémité de l'adsorbeur, les flux fixés (F) intéressant alternativement les extrémités d'entrée (E) et de sortie (F) de l'adsorbeur d'une étape (I-IV) à la suivante. Application notamment à la production d'oxygène à partir d'air.

## Description

La présente invention concerne les procédés de traitement par séparation de mélanges gazeux par adsorption à variation de pression.

Dans les procédés PSA de séparation de mélanges gazeux par adsorption un très grand nombre d'architectures d'installation et de cycles de mise en oeuvre ont été proposés.

Pour la seule production d'oxygène à partir de l'air, le nombre d'adsorbeurs varie de 1 à plus de 4, les matériaux adsorbants sont choisis dans une gamme étendue, et les variantes de cycles sont légion.

La multiplication et la coexistence de tous ces procédés et architectures s'expliquent par la prise en compte de différents paramètres financiers influant sur les coûts de production du ou des gaz à séparer, selon les plages des capacités de production (qui peuvent varier dans une gamme présentant un rapport de 1 à 200), les coûts de l'énergie (qui peuvent varier d'un facteur de 1 à 6 suivant les pays et les conditions d'achat), et enfin les coûts d'investissement des installations elles-mêmes.

Ainsi, on constatera qu'entre une grosse unité dans un pays où l'énergie est chère et une petite unité dans un pays où l'énergie est bon marché, la part de la consommation électrique dans le coût de production, peut varier, dans le cas particulier de l'oxygène, entre plus de 70 % et moins de 10 %. Il s'ensuit qu'un même procédé et/ou une même architecture d'installation ne sera jamais optimum sur toute la gamme de clientèle possible. La tendance est donc de choisir le procédé et/ou l'architecture les mieux adaptés pour un client et/ou une utilisation précis dans une approche « à la demande ». Une telle approche est déjà peu économique pour les unités de taille relativement importante, mais devient rédhibitoire pour les installations de petite taille ou de faible capacité où l'investissement devient prépondérant et important en valeur absolue.

Le besoin existe donc de proposer des procédés et installations standards mais néanmoins adaptables, notamment aux coûts locaux de l'énergie, pour approcher les conditions optimales habituellement atteintes par la mise en oeuvre de procédés et d'installations sur mesure, notamment pour la gamme des unités de moyenne capacité, typiquement inférieures à 30 ou 40 tonnes par jour d'oxygène.

La présente invention a pour objet de proposer un procédé simple et souple à cycles adaptables, permettant, avec une installation de base simple et peu coûteuse, une optimisation des conditions d'exploitation en favorisant notamment soit la productivité, soit la consommation énergétique.

Pour se faire, selon une caractéristique de l'invention, le procédé de séparation de mélange gazeux par adsorption à variation de pression dans un adsorbeur contenant au moins un adsorbant et ayant une entrée et une sortie, suivant un cycle répétitif, comporte les étapes successives suivantes :
- une étape 1, de repressurisation à partir de la pression basse de cycle,
- des étapes Il et III dans l'une desquelles la pression haute de cycle est atteinte,
- une étape IV, de dépressurisation/purge, où la pression basse de cycle est atteinte,

où chaque étape (I-IV) comporte un flux gazeux fixé à une extrémité de l'adsorbeur et un flux gazeux libre à l'autre extrémité de l'adsorbeur, les flux fixés intéressant alternativement les extrémités d'entrée et de sortie de l'adsorbeur d'une étape (I-IV) à la suivante.

La présente invention a pour autre objet de proposer une installation convenant pour la mise en oeuvre de ce procédé, comprenant une installation pour la mise en oeuvre d'un procédé selon l'une des revendications précédentes, comprenant un adsorbeur contenant au moins un adsorbant et ayant une extrémité d'entrée et une sortie, au moins une capacité reliée, via au moins un moyen de vanne, à la sortie, l'entrée étant reliée à au moins un volume de mélange gazeux à séparer et à au moins un volume récepteur de gaz par au moins un dispositif de transfert de flux , et des moyens programmables de commande synchronisée des moyens de vanne et du dispositif de transfert, autorisant ainsi des fonctionnements suivant au moins deux cycles différents.

D'autres caractéristiques et avantages de la présente invention ressortiront de la description suivante de modes de réalisations, donnés à titre illustratif mais nullement limitatif, faite en relation avec les dessins annexés, sur lesquels :
- la figure 1 est une vue schématique d'une installation pour la mise en oeuvre des procédés selon l'invention;
- la figure 2 est une vue synoptique illustrant les étapes et sous-étapes des procédés selon l'invention;
- les figures 3 à 6 représentent des exemples de réalisation de cycles pouvant être obtenus avec une installation selon la figure 1.

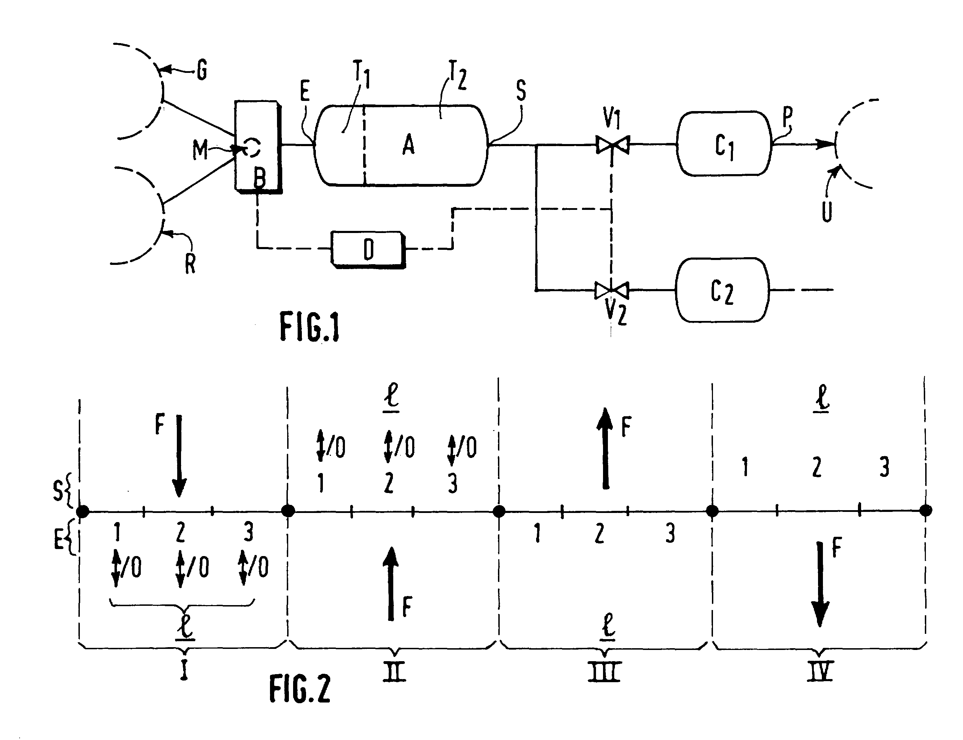

On a représenté sur la figure 1 une installation de traitement par séparation de mélange gazeux selon l'invention, qui comprend essentiellement un adsorbeur A, contenant au moins un lit d'adsorbant T1, T2 et ayant une entrée E de mélange gazeux à séparer et une sortie S de mélange gazeux séparé.

Ici, comme dans la suite de la description, les notions « entrée » et « sortie » se rapportent aux sens d'écoulement normaux des fluides dans les phases d'adsorption.

La sortie S de l'adsorbeur A est reliée à une première capacité C1 et à une deuxième capacité C₂ via des moyens de vannes V₁, V_{2,} respectivement.

Au moins la première capacité C₁ comporte une sortie P de prélèvement de gaz, typiquement pour la fourniture de gaz de production, séparé ou épuré, à un poste ou un circuit utilisateur U.

Optionnellement la deuxième capacité C₂ peut également comporter une sortie pour le prélèvement de gaz pour un usage externe.

L'entrée E de l'adsorbeur A est reliée, via un dispositif de transfert de flux B, à au moins un volume de gaz à séparer G alimentant l'adsorbeur en gaz à séparer, et au moins un volume récepteur de gaz R, pour recevoir le gaz résiduaire en phase de désorption ou de purge de l'adsorbeur.

Le dispositif de transfert B est un système de transfert de flux entre l'adsorbeur A et les volumes G et R, et éventuellement entre ces derniers, quelles que soient les pressions de gaz disponibles dans ces volumes.

Ainsi, si le mélange gazeux à séparer dans le volume G est à une pression convenant au procédé de séparation, le transfert entre le volume G et l'adsorbeur A s'effectuera via un circuit muni de vannes, sans transiter par une machine tournante de compression.

De façon identique, si la pression du volume de gaz récepteur R est compatible avec le procédé, le transfert de gaz entre l'adsorbeur et le volume R s'effectuera, via un circuit muni de vannes, sans transiter par une machine tournante de pompage.

Tel sera le cas, par exemple, pour la séparation d'oxygène et d'azote de l'air sur un site disposant d'un réseau d'air comprimé et/ou d'un réseau de vide.

Par contre, dans les cas, les plus fréquents, où les volumes G et R sont à des pressions non immédiatement exploitables par le procédé, les transferts vers et/ou en provenance de l'adsorbeur A s'effectueront en outre via une machine tournante M de compression et/ou de pompage.

Dans ce cas, les volumes, généralement de grande capacité, G et R peuvent être confondus (par exemple l'atmosphère ambiante pour la séparation de constituants de l'air ambiant).

Un exemple d'un tel système à vannes de distribution et à machine tournante à fonctionnement continu est donné dans le document US 4 561 865 (McCombs et al.) et, avec une machine tournante inversible, dans la demande de brevet européen 96 401045.8, au nom de la demanderesse.

Selon l'invention, comme il va maintenant être décrit plus en détails, en relation avec les exemples de cycles, l'installation comporte en outre un système D de contrôle de commande synchronisée des moyens de vanne V1 et V2, et du dispositif de transfert B.

Le système D peut être préprogrammé pour au moins deux cycles différents, ou programmable sur site pour la mise en oeuvre d'au moins deux cycles différents adaptés à des conditions d'exploitation particulières, les changements de cycle pouvant se faire manuellement ou automatiquement selon certains critères prioritaires, par exemple la capacité de production requise en nominal ou en pointe, la pureté recherchée et/ou les coûts horaires de l'électricité.

Selon un aspect de l'invention, comme schématisé sur la figure 2, un tel dispositif permet la mise en oeuvre d'un format de cycle comportant quatre étapes I-IV où chaque étape comporte, à une extrémité de l'adsorbeur, un flux fixé F et, à l'autre extrémité de l'adsorbeur, un flux libre ℓ déterminés en fonction des conditions opératoires et économiques du site.

Ce format de cycle permet une grande souplesse au niveau de la réalisation, tout en limitant la complexité au niveau de la programmation du système D.

Par flux fixe (F) on entend un flux de gaz s'effectuant, à une extrémité de l'adsorbeur, comme figuré par les flèches épaisses F sur la fig. 2, dans le même sens (entrant ou sortant) sur toute la durée d'une étape de cycle.

Par flux libre (ℓ), on entend un flux tel que la circulation, à une extrémité de l'adsorbeur, peut être, selon des sous-étapes de ladite étape, dans un sens, nulle, ou dans l'autre sens, comme figuré par les symboles double-flèche/0 sur la figure 2.

Pour offrir une palette de cycles adaptée aux conditions d'utilisation requises, chaque étape I-IV est sub-divisée en au moins deux, typiquement trois sous-étapes, la durée de chaque sous-étape pouvant être fixée indépendamment d'une étape à l'autre et dans une même étape.

Pour la simplicité de l'exposé, dans les exemples suivants les sous-étapes seront toutes de même durée.

Selon l'invention, pour permettre de réaliser le maximum de cycles opérationnellement intéressants, chaque cycle comprend une étape I de repressurisation à partir de la pression basse de cycle, des étapes Il et III dans l'une desquelles la pression haute de cycle est atteinte, et une étape IV de dépressurisation/purge, où la pression basse de cycle est atteinte, et les flux fixés F intéressent alternativement les extrémités d'entrée E et de sortie F de l'adsorbeur d'une étape I-IV à la suivante.

Selon un aspect de l'invention, pour le traitement (séparation/épuration) de mélange gazeux constitué essentiellement d'azote et d'oxygène, la durée totale des quatre étapes I-IV du cycle est typiquement comprise, pour les applications industrielles, entre 20 et 200 secondes.

De façon plus spécifique, comme représenté sur les figures 2 à 6, les flux fixés sont entrant pour les étapes I et Il, et sortant pour les étapes III et IV.

De façon encore plus spécifique, l'étape I comporte un flux fixé provenant d'au moins une des capacités Cᵢ, entrant à contre-courant par la sortie S, pour une phase de recompression et l'étape Il comprend un flux fixé provenant du volume G de mélange gazeux à séparer et entrant à co-courant, pour une phase de recompression et/ou de production, par l'entrée E de l'adsorbeur.

Dans la phase IV, le flux fixé est sortant, à contre-courant, de l'entrée de l'adsorbeur pour rejoindre le volume R de réception de gaz résiduaire de désorption de l'adsorbeur.

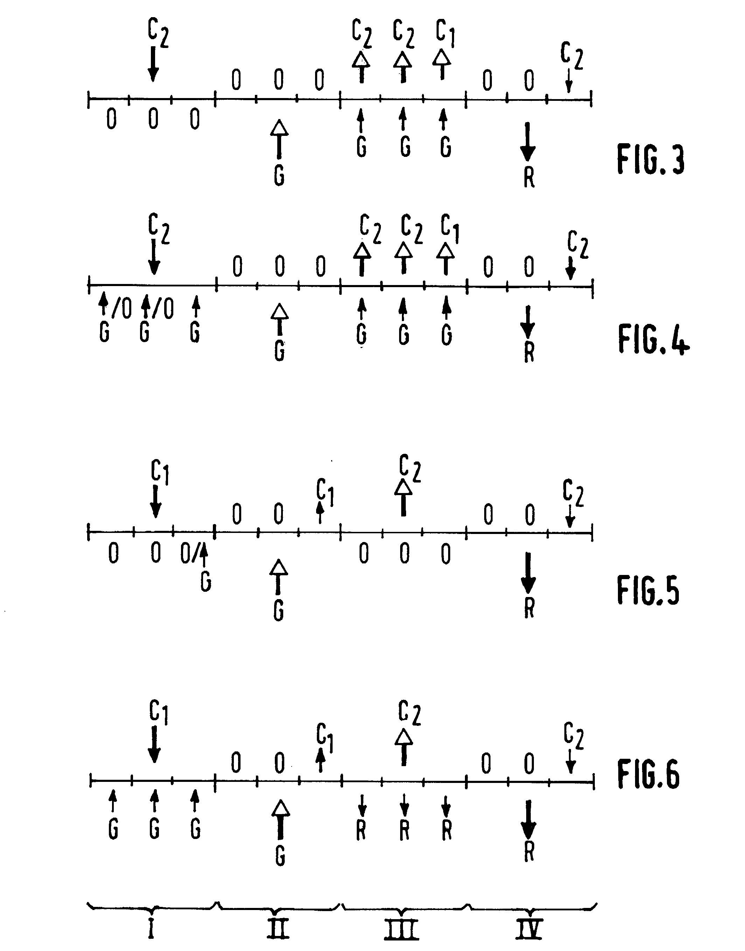

Le cycle représenté sur la figure 3 permet d'obtenir à la fois une productivité élevée et la fourniture, au poste utilisateur, de gaz de production à une pression proche de la pression maximale du cycle.

Dans ce cycle, les flux libres sont nuls pendant les étapes I et Il, c'est-à-dire que la recompression s'effectue d'abord par le gaz de production en provenance de la capacité C₂ puis par le mélange gazeux à séparer comprimé, dont la fourniture à l'adsorbeur se produit pendant toute l'étape III.

Dans cette étape III, le flux fixé « sortant » est adressé lors des deux premières sous-étapes à la capacité C₂, jouant ainsi le rôle de capacité d'élution/repressurisation, et, pendant la dernière sous-étape, soit donc au voisinage de la pression haute du cycle, à la capacité de production C₁.

Lors de la phase IV, le flux libre lors des deux premières sous-étapes est nul et, lors de la dernière sous-étape, est entrant à contre-courant, en provenance de la capacité C₂, pour réaliser une élution à pression basse du cycle de l'adsorbant.

La fraction de gaz entreposée dans la capacité C₂ pour l'élution et la recompression bénéficie d'un large ΔP de pression de stockage, la capacité C₂ étant pratiquement à la pression haute du cycle lorsqu'elle est isolée (à la fin de la deuxième sous-étape de l'étape III).

Le cycle de la figure 4 diffère du précédent par le fait que l'étape I comporte, au moins pendant la dernière sous-étape, un flux libre entrant à co-courant en provenance du volume G de mélange gazeux à séparer. Cette approche, autorisée par la co-pressurisation à contre-courant par du gaz de la capacité C₂, permet notamment de sous-dimensionner la machine tournante M et convient tout particulièrement à une installation avec une machine réversible.

Dans la variante avec un flux libre entrant pendant uniquement la dernière sous-étape de l'étape I, convenant à une machine tournante classique, cette dernière fonctionne temporairement en détendeur car la pression dans l'adsorbeur A est inférieure à la pression dans le volume G, qui est typiquement la pression atmosphérique, ce qui permet de réduire les coûts énergétiques d'actionnement de cette machine.

Dans la variante avec un flux libre entrant à co-courant pendant toute l'étape I, convenant à une machine tournante réversible, cette dernière, sous l'effet du différentiel de pression entre le volume G et l'adsorbeur A dépressurisé, accélére d'elle-même pour approcher ou atteindre sa vitesse nominale, en récupérant ainsi gratuitement l'énergie cinétique correspondante.

Dans le cycle de la figure 5, la phase de recompression/production se limite aux étapes I et Il avec production en fin d'étape Il, l'étape III étant une étape de décompression partielle à co-courant vers la capacité C₂ (pour réaliser, par la suite, l'élution à la pression basse de cycle), la recompression s'effectuant à contre-courant par du gaz de production, lors de l'étape 1, avec donc un gaz plus pur que celui, provenant du C₂, ayant servi à l'élution, ce qui permet de réaliser un léger gain sur l'énergie spécifique de l'installation.

Comme dans le cycle de la figure 4, un flux libre d'admission de mélange gazeux à séparer peut être admis à co-courant en fin d'étape 1.

Le cycle de la figure 6 dérive de celui de la figure 5 en étant particulièrement adapté à une installation à machine tournante réversible, avec, comme dans le cycle de la figure 4, un flux libre d'admission à co-courant de mélange gazeux à séparer pendant toute l'étape I et, ici un flux libre de détente à co-courant vers le volume R pendant toute la phase III, simultanément avec la décompression à co-courant vers la capacité C₂, la machine réversible tournant ainsi pendant une moitié de cycle dans un sens et l'autre moitié de cycle dans l'autre sens.

Quoique la présente invention ait été décrite en relation avec des modes de réalisation particuliers, elle ne s'en trouve pas limitée, mais au contraire susceptible de modifications et de variantes qui apparaîtront à l'homme de l'art. En particulier, pour augmenter la plage d'utilisation d'un adsorbeur de taille donnée, on peut utiliser, dans l'adsorbeur, deux tamis successifs différents permettant des performances différentes à volume global fixé, et donc autorisant une assez large souplesse dans les plages de débits selon les proportions respectives des tamis.

## Revendications

1. Procédé de séparation de mélange gazeux par adsorption à variation de pression dans un adsorbeur (A) contenant au moins un adsorbant et ayant une entrée (E) et une sortie (S), suivant un cycle répétitif comportant les étapes successives suivantes :
- une étape 1, de repressurisation à partir de la pression basse de cycle,
- des étapes Il et III dans l'une desquelles la pression haute de cycle est atteinte,
- une étape IV, de dépressurisation/purge, où la pression basse de cycle est atteinte,
où chaque étape (I-IV) comporte un flux gazeux fixé (F) à une extrémité de l'adsorbeur et un flux gazeux libre (ℓ) à l'autre extrémité de l'adsorbeur, les flux fixés (F) intéressant alternativement les extrémités d'entrée (E) et de sortie (F) de l'adsorbeur d'une étape (I-IV) à la suivante.

2. Procédé selon la revendication 1, caractérisé en ce que les flux fixés (F) sont entrants pour les étapes I et II et sortants pour les étapes III et IV.

3. Procédé selon la revendication 1 ou la revendication 2, caractérisé en ce que chaque étape (I-IV) est divisée en au moins deux sous-étapes (1, 2, 3) pour le flux libre qui est, pour chaque sous-étape, choisi dans le groupe constitué des flux entrant, sortant et sensiblement nul.

4. Procédé selon la revendication 3, caractérisé en ce que chaque étape (I-IV) est divisée en au moins trois sous-étapes (1-3) pour le flux libre (ℓ).

5. Procédé selon l'une des revendications 2 à 4, caractérisé en ce que le flux fixé (F) est entrant à co-courant pour l'étape Il et provient d'un volume (G) du mélange gazeux à séparer.

6. Procédé selon la revendication 5, caractérisé en ce que le flux fixé (F) entrant à contre-courant de l'étape I provient d'une capacité (Cᵢ) reliée à la sortie (S).

7. Procédé selon l'une des revendications 2 à 6, caractérisé en ce que l'étape IV comprend une sous-étape finale avec un flux libre entrant à contre-courant et provenant d'une capacité (Cᵢ) reliée à la sortie (S).

8. Procédé selon la revendication 6 ou la revendication 7, caractérisé en ce que la capacité (Cᵢ) est alimentée par le flux fixe sortant à co-courant pendant l'étape III.

9. Procédé selon l'une des revendications 6 à 8, caractérisé en ce que la capacité (Ci) est alimentée par le flux libre sortant à co-courant pendant au moins la sous-étape finale de l'étape Il.

10. Procédé selon l'une des revendications 2 à 9, caractérisé en ce que le flux libre de l'étape III est non nul.

11. Procédé selon l'une des revendications 1 à 10, caractérisé en ce que chaque sous-étape a une durée identique.

12. Procédé selon les revendications 1 à 11, caractérisé en ce que la durée du cycle est comprise entre 20 et 200 secondes.

13. Procédé selon les revendications 1 à 12, pour le traitement d'un mélange gazeux constitué essentiellement d'azote et d'oxygène.

14. Installation pour la mise en oeuvre d'un procédé selon l'une des revendications précédentes, comprenant un adsorbeur (A) contenant au moins un adsorbant (T1, T2) et ayant une extrémité d'entrée (E) et une sortie (F), au moins une capacité (Cᵢ) reliée, via au moins un moyen de vanne (Vᵢ), à la sortie (S), l'entrée (E) étant reliée à au moins un volume (G) de mélange gazeux à séparer et à au moins un volume récepteur de gaz (R) par au moins un dispositif de transfert de flux (B), et des moyens (D) programmables de commande synchronisée des moyens de vanne (V) et du dispositif de transfert (B).

15. Installation selon la revendication 14, caractérisée en ce que l'adsorbeur contient au moins deux tamis successifs différents (T1, T2).

16. Installation selon les revendications 14 ou 15, caractérisée en ce qu'elle comporte deux capacités (C₁, C₂) reliées à la sortie (S) de l'adsorbeur, l'une (C1) des capacités comportant une sortie (P) de prélèvement de gaz.

17. Installation selon les revendications 14 à 16, caractérisée en ce que le dispositif de transfert comporte au moins une machine tournante (M).
